# EUROPEAN PATENT SPECIFICATION

(11) **EP 2 884 803 B1**
(45) Date of publication and mention of the grant of the patent: **30.06.2021**
(21) Application number: 13827534.2
(22) Date of filing: 12.08.2013
(51) Int. Cl.: H04W 48/08, H04W 36/00

(54) **SWITCHING CONTROL METHOD AND APPARATUS**
UMSCHALTSTEUERUNGSVERFAHREN UND -VORRICHTUNG
PROCÉDÉ ET APPAREIL DE COMMANDE DE COMMUTATION

(30) Priority: 10.08.2012 CN 201210284366
(43) Date of publication of application: 17.06.2015
(73) Proprietor: Honor Device Co., Ltd., Shenzhen, Guangdong 518040 (CN)
(72) Inventor: ZHANG, Liangliang, Shenzhen Guangdong 518129 (CN); ZHANG, Tao, Shenzhen Guangdong 518129 (CN); LIN, Bo, Shenzhen Guangdong 518129 (CN); LI, Yajuan, Shenzhen Guangdong 518129 (CN)
(74) Representative: Roth, Sebastian
(86) International application number: PCT/CN2013/081291
(87) International publication number: WO 2014/023269

(56) References cited:
- WO-A1-02/065796
- WO-A1-2011/137784
- WO-A1-2012/065959
- CN-A- 102 026 279
- CN-A- 102 348 244
- CN-A- 102 469 557
- US-A1- 2012 182 912
- CATT: "Introduce a SRB-Only PS HO method", 3GPP DRAFT; S2-102596, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Kyoto; 20100510, 5 May 2010 (2010-05-05), XP050434782, [retrieved on 2010-05-05]
- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 11)", 3GPP STANDARD; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V11.2.0, 27 June 2012 (2012-06-27), pages 1-201, XP050581140, [retrieved on 2012-06-27]
- None

## Description

### TECHNICAL FIELD

The present invention relates to the field of communication technologies and, in particular, to a handover control method and apparatus.

### BACKGROUND

Under heterogeneous networks, in a network covered by a macro base station (Macro eNodeB), there is a plurality of small cellular base stations, which perform wired communication or wireless communication with the macro base station. When a terminal moves in the network covered by the macro base station, inevitably, the terminal needs to change a control plane unceasingly, resulting in handovers.

Currently, an existing handover method includes: transmitting, by a UE, a measurement report to a source eNodeB; making, by the source eNodeB, a handover decision based on the measurement report and other information, and selecting a target cell for the UE; transmitting, by the source eNodeB, a handover request message to a target eNodeB, so that the target eNodeB performs an admission control after receiving the handover request message; then, transmitting, by the target eNodeB, a handover confirmation message to the source eNodeB, if the target eNodeB agrees with a handover of a terminal; the handover request message including configuration information of the target cell; transmitting, by the source eNodeB, a handover command message to the UE; transmitting, by the source eNodeB, an SN status transfer message to the target base station to inform the target base station of uplink PDCPSN reception status (uplink PDCP SN receiver status) of the UE and downlink packet data convergence protocol PDCP sequence number transmission status (PDCP SN, the downlink PDCP SN transmitter status) of the UE, so that the target eNodeB knows data transfer status of the current UE; then, transmitting, by the UE, a random access preamble to the target eNodeB, after the handover command message is received; transmitting, by the target eNodeB, a random access response message to the UE; transmitting, by the UE, a handover complete message to the target eNB; subsequently, performing, by the target eNodeB, a path selection procedure, i.e. acquiring path information from a gateway via a mobility management entity (MME), since the gateway do not know that the control plane has been switched, the gateway will transmit the path information to the source eNodeB and the target eNodeB via the MME generally.

In a current implementation, when a UE moves in the network covered by the macro base station, the control plane needs to be changed unceasingly and, thereby resulting in the handover described above, during the handover, data transfer may be interrupted, and thus affecting the usage of a user, therefore, the technical problem that remains to be solved at present lies in communication interruptions caused by frequently switching a control plane by a UE when moving in a macro network.

WO 2011/137784 A1 discloses a method for accessing a base station, including: establishing, by a current macro base station, a control plane connection with a user equipment according to an access request of the user equipment, and assigning a first cell-radio network temporary identity to the user equipment; and when receiving a measurement report of micro base stations reported by the user equipment, selecting a micro base station for the user equipment according to a preset policy so that the user equipment establishes a data plane connection with the micro base station, and notifying context information of the user equipment to the micro base station, where the context information includes the first cell-radio network temporary identity assigned to the user equipment.

US 2012/0182912 A1 discloses a method and apparatus for handling local Internet protocol (IP) access (LIPA) connection during circuit switched fallback (CSFB) and handover (HO).

### SUMMARY

Embodiments of the present invention provide a handover control method and apparatus, so as to solve the technical problem of communication interruptions caused by frequently switching a control plane by a UE when moving in a macro network.

To solve the above technical problem, embodiments of the present invention provide a handover control method, the method includes:
acquiring, by a source base station, indication transmitted by a target base station, where the indication includes: the first indication indicating that a user plane of a user equipment (UE) remains unchanged, and a control plane of the UE is switched to the target base station; or the second indication indicating that only a control plane of the UE is switched to the target base station, and user data of the UE is transmitted by a small cell base station; or third indication indicating that both a user plane and a control plane of the UE are switched to the target base station; and
transmitting, by the source base station, information to the small cell base station for stopping transmitting data to the UE;
transmitting, by the source base station, a handover command to the UE, so as to indicate the UE to access to the target base station;
acquiring a new next hop key, NH, and a next hop chaining counter, NCC, and generating a new access stratus, AS, key according to the NH;
transmitting the new AS key, the NCC and an evolved universal terrestrial radio access network radio access bearer identity, E-RAB ID, to the small cell base station; and
transmitting information to the small cell base station for continuing transmitting data to the UE.

Correspondingly, embodiments of the present invention provide a handover control apparatus, serving as a source base station, including:
a first acquiring unit, configured to acquire indication transmitted by a target base station, where the indication includes: the first indication indicating that a user plane of a user equipment (UE) remains unchanged, and a control plane of the UE is switched to the target base station; or the second indication indicating that only a control plane of the UE is switched to the target base station, and user data of the UE is transmitted by a small cell base station; or third indication indicating that both a user plane and a control plane of the UE are switched to the target base station;
a first transmitting unit, configured to transmit a handover command to the UE, so as to indicate the UE to access to the target base station;
a second transmitting unit, configured to transmit information to the small cell base station for stopping transmitting data to the UE before the first transmitting unit transmits the handover command to the UE;
a third transmitting unit, configured to transmit information to the small cell base station for continuing transmitting data to the UE after the second transmitting unit transmits the information for stopping transmitting data to the UE and after the UE accesses to the target base station;
a second acquiring unit, configured to acquire a new next hop key, NH and a next hop chaining counter, NCC, after the UE accesses to the target base station and before the third transmitting unit transmits the information for continuing transmitting data to the UE;
a generating unit, configured to generate a new access stratus, AS key according to the NH;
a key transmitting unit, configured to transmit the new AS key, the NCC and an E-RAB ID to the small cell base station.

Correspondingly, embodiments of the present invention provide a computer readable storage medium for storing a computer program, where the computer program causes a computer to perform the handover control method described above.

It can be known from the above technical solutions that, a source base station transmits indication to a target base station, so that the target base station, after acquiring the indication, does not reserve resources used for data scheduling for a handover of the UE, or release resources used for data scheduling which are reserved for a handover of the UE. Therefore, in a case where a user plane remains unchanged and a control plane is switched, a normal communication is ensured for the UE.

### BRIEF DESCRIPTION OF DRAWINGS

In order to make technical solutions in embodiments of the present invention or the prior art more clearly, the accompanying drawings used in the embodiments are briefly described hereunder. Obviously, the describe drawings are merely some embodiments of the present invention. For persons skilled in the art, other drawings may also be obtained based on these drawings without any inventive efforts.
FIG. 1 is a flow chart of a handover control method according to an embodiment of the present invention;
FIG. 2 is a second flow chart of a handover control method according to an embodiment of the present invention;
FIG. 3 is a third flow chart of a handover control method according to an embodiment of the present invention;
FIG. 4 is a first flow chart of a resource control method according to an embodiment of the present invention;
FIG. 5 is a second flow chart of a resource control method according to an embodiment of the present invention;
FIG. 6 is a first schematic structural diagram of a handover control apparatus according to an embodiment of the present invention;
FIG. 7 is a second schematic structural diagram of a handover control apparatus according to an embodiment of the present invention;
FIG. 8 is a third schematic structural diagram of a handover control apparatus according to an embodiment of the present invention;
FIG. 9 is a first schematic structural diagram of a resource control apparatus according to an embodiment of the present invention;
FIG. 10 is a second schematic structural diagram of a resource control apparatus according to an embodiment of the present invention;
FIG. 11 is a flowchart of a first application example of a handover control method according to the present invention;
FIG. 12 is a flowchart of a second application example of a handover control method according to the present invention;
FIG. 13 is a flowchart of a third application example of a handover control method according to the present invention.

### DESCRIPTION OF EMBODIMENTS

Technical solutions in embodiments of the present invention are hereinafter described clearly and completely with reference to accompanying drawings in embodiments of the present invention. Obviously, the described embodiments are only a part of embodiments of the present invention, rather than all embodiments of the present invention. All the other embodiments obtained by persons of ordinary skill in the art based on embodiments of the present invention without any inventive efforts shall fall within the protection scope of the present invention, which is defined by the appended claims.

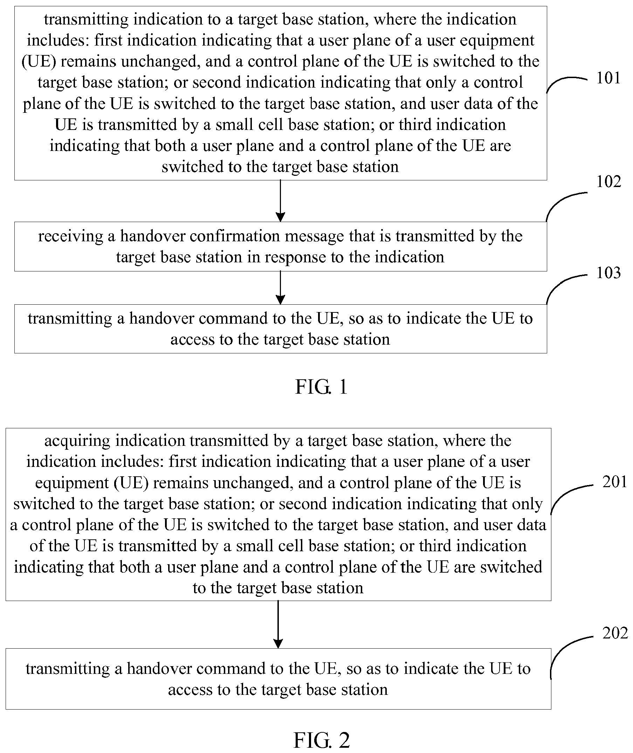

Reference may be made to FIG. 1 which is a flow chart of a handover control method according to an embodiment of the present invention; the method includes:
Step 101, transmitting indication to a target base station, where the indication includes: first indication indicating that a user plane (User Plane) of a user equipment (UE) remains unchanged, and a control plane (Control Plane) of the UE is switched to the target base station; or second indication indicating that only a control plane of the UE is switched to the target base station, and user data of the UE is transmitted by a small cell base station; or third indication indicating that both a user plane and a control plane of the UE are switched to the target base station;

In this embodiment, there is a plurality of ways for a source base station to transmit the indication to a target base station, any message capable of carrying the indication is fine, two implementations are taken as examples in the following, which is not limited thereto, specifically including:
One way is that: a source base station may transmit indication to the target base station via a handover request message, i.e. the indication is carried in the handover request message; the indication includes the first indication, the second indication or the third indication;

Another way is a negotiation way that: before transmitting the indication to the target base station,
A) the source base station transmits the indication to the target base station via a single message, to indicate that the terminal handover is that a user plane remains unchanged and a control plane is switched; or to indicate that there is a control plane handover and all user data of the UE is transmitted by a small cell base station; or,
B) the source base station may negotiate with the target base station through the negotiation way about whether to agree the indication indicating that the user plane remains unchanged and the control plane is switched; or, about whether to agree the indication indicating that only the control plane is switched and all user data of the UE is transmitted by a small cell base station. Specifically, a plurality of messages are used, for example, the source base station transmits the indication to the target base station via a request message, and receives a response message (the response message may indicate agreed, and may also indicate disagreed) fed back by the target base station, and so on. Regarding A and B (an agreed situation), subsequently, when a base station initiates a handover procedure for a terminal, i.e. transmits a handover request message to a target base station, then the target base station will learn the indication indicating that a handover of the terminal (all terminals or a terminal) belonging to the base station is that the user plane remains unchanged and the control plane is switched; or, indicating that only the control plane is switched and all user data of the UE is transmitted by the small cell base station.

These ways enable the target base station to know that the user plane remains unchanged and the control plane is switched or know that only the control plane is switched and all user data of the UE is transmitted by the small cell base station, and it is no need to reserve a resource used for data scheduling for a handover of the UE.

Step 102, receiving a handover confirmation message that is transmitted by the target base station in response to the indication;

Where, the source base station, when receiving the handover confirmation message transmitted by the target base station, has known that the target base station will not reserve a resource used for data scheduling for a handover of the UE, and then may initiate Step 103;

Step 103, transmitting a handover command to the UE, so as to indicate the UE to access to the target base station.

In this step, after the source base station transmits the handover command to the UE, the UE initiates a random access to the target base station, and accesses to the target base station.

In embodiments of the present invention, a source base station notifies a target base station of indication indicating that a user plane remains unchanged and a control plane is switched; or indication indicating that only a control plane is switched and all user data of a UE is transmitted by a small cell base station, so that the target base station, after acquiring the indication, does not reserve a resource used for data scheduling for a handover of the UE. Therefore, in a case where a user plane remains unchanged and a control plane is switched, a normal communication is ensured for the UE during a handover. Or, in a case where both a user plane and a control plane are switched, a normal communication is ensured for the UE.

Alternatively, in the embodiments, before transmitting the indication to the target base station, the method may further include: receiving a measurement report transmitted by a user equipment UE; selecting a target base station for the UE according to the measurement report; where, the measurement report may include: a measurement result of a cell covered by a small cell base station and/or measurement results of a cell covered by a candidate for target base station of handover, and so on. Specifically, the measurement result include {a cell identity of a small cell base station, a measurement result} and/or {a cell identity under a base station, a measurement result} respectively;

Alternatively, in this embodiment, a value of the indication may be set to 1 or 0 or 2, certainly, may also be set to other values, for example, 11, 00 or 01, or 10. As long as values set for the first indication, the second indication and the third indication in the indication are different from each other, it will be fine. This embodiment will not make a limitation.

Alternatively, in order to facilitate the target base station to know in which base station user data of the UE is transmitted, the handover request message may also include: an identity of a small cell base station, or a cell identity of a small cell base station.

Alternatively, the handover request message also includes: an identity of a small cell base station, or a cell identity of a small cell base station; or, also includes indication indicating that the control plane of the UE is separated from the user plane.

Alternatively, when or after receiving the handover confirmation message transmitted by the target base station, the method may also include: transmitting information to the small cell base station for stopping transmitting data to the UE; and after the UE accesses to the target base station, transmitting, by a source base station or the target base station information to the small cell base station for continuing transmitting data to the UE. In this embodiment, the transmitted data may be encrypted using the original key, and the transmitted data may also be encrypted using an acquired new key. This embodiment will not make a limitation.

A process for acquiring the new key is: after the UE accesses to the target base station, and before transmitting the information to the small cell base station for continuing transmitting data to the UE, the method may also include: acquiring a new next hop key (NH, Next HOP key) and a next hop chaining counter (NCC, Next Hop Chaining Counter), and generating a new access stratus (AS, Access Stratum) key according to the NH; and transmitting the new AS key, the NCC and an evolved universal terrestrial radio access network radio access bearer identity (E-RAB ID, E-UTRAN Radio Access Bearer) to the small cell base stationB.

The acquiring the NH and the NCC specifically includes: receiving the NH and the NCC transmitted by the target base station; or, initiatively acquiring the NH and the NCC from the target base station; where, the NH and the NCC are acquired by the target base station from an MME during a path selection.

In embodiments of the present invention, a source base station may transmit indication to a target base station via a single message, may also notify the target base station of the indication via a plurality of messages (through negotiations), may also transmit an indication message (a single message, a plurality of messages/a negotiation way, etc.) to the target base station before the UE switches, and may also transmit an indication message to the target base station during a switching procedure of the UE (e.g., transmit the indication in a handover request message.), hence, the target base station, after acquiring the indication, may not reserve a resource used for data scheduling for a handover of the UE; thus, in a case where a user plane remains unchanged and a control plane is switched, a normal communication is ensured for the UE and user satisfaction is improved.

Furthermore, in embodiments of the present invention, the source base station may also transmit information to the small cell base station for stopping transmitting data to the UE; and after the UE accesses to the target base station, the source base station or the target base station transmits information to the small cell base station for continuing transmitting data to the UE. The information for continuing transmitting data to the UE may use the original key to encrypt the data, and may also acquire a new key and use the new key to encrypt the data, so as to ensure security of the data transfer.

Reference may also be made to FIG. 2 which is a second flow chart of a handover control method according to an embodiment of the present invention, the method includes:
Step 201, acquiring indication transmitted by a target base station, where the indication includes: first indication indicating that a user plane of a user equipment (UE) remains unchanged, and a control plane of the UE is switched to the target base station; or second indication indicating that only a control plane of the UE is switched to the target base station, and user data of the UE is transmitted by a small cell base station; or third indication indicating that both a user plane and a control plane of the UE are switched to the target base station;

Where, an acquiring method specifically includes:
One case is that: a source base station receives a handover confirmation message transmitted by the target base station in response to a handover request message of the source base station, the handover confirmation message includes the indication; that is to say, a source base station receives a handover confirmation message transmitted by the target base station, where the handover confirmation message includes: first indication indicating that a user plane of a user equipment (UE) remains unchanged, and a control plane of the UE is switched to the target base station; or second indication indicating that only a control plane of the UE is switched to the target base station, and user data of the UE is transmitted by a small cell base station; or third indication indicating that both a user plane and a control plane of the UE are switched to the target base station; or,

Another case is that: a source base station initiatively acquire the indication from the target base station, that is to say, the source base station initiatively transmits to the target base station first indication indicating that a user plane of a user equipment (UE) remains unchanged, and a control plane of the UE is switched to the target base station; or second indication indicating that only a control plane of the UE is switched to the target base station, and user data of the UE is transmitted by a small cell base station; or third indication indicating that both a user plane and a control plane of the UE are switched to the target base station.

Certainly, in this embodiment, the first indication, the second indication or the third indication may also be acquired through negotiations, reference may be made to the above embodiments for details of a specific negotiation procedure, which will not be repeated herein.

Step 202, transmitting a handover command to the UE, so as to indicate the UE to access to the target base station.

In embodiments of the present invention, after receiving or acquiring first indication or second indication or third indication from the target base station, the source base station can know that the target base station does not reserve a resource used for data scheduling for a handover of the UE according to the first indication or the second indication or the third indication; and then, transmit the handover command to the UE, so as to indicate the UE to access to the target base station, thereby ensuring that in a case where the user plane remains unchanged and the control plane is switched, a normal communication is ensured for the UE during its handover procedure.

Alternatively, before step 201, the method may also include: receiving a measurement report transmitted by a user equipment (UE); selecting a target base station for the UE according to the measurement report; acquiring configuration information of the target base station from the target base station.

Alternatively, in this embodiment, values set for the first indication, the second indication and the third indication are different from each other, for example, a value of the first indication may be set to 1, a value of the second indication may be set to 0, and a value of the third indication can be set to 2; certainly, they are not limited thereto, and may also be set to other values, for example, 100, 110 or 001, etc.

Alternatively, in order to facilitate the target base station to know in which base station user data of the UE is transmitted, before acquiring the indication transmitted by the target base station, the method further includes: transmitting a handover request message to the target base station, where the handover request message may include: an identity of a small cell base station, or a cell identity of a small cell base station.

Alternatively, when or after receiving the handover confirmation message transmitted by the target base station, the method may also include: transmitting, by the source base station, information to the small cell base station for stopping transmitting data to the UE; and after the UE access to the target base station, transmitting, by the source base station or the target base station, information to the small cell base station for continuing transmitting data to the UE.

Alternatively, after the UE accesses to the target base station, and before the source base station (or the target base station) transmits the information to the small cell base station for continuing transmitting data to the UE, the method may also include: acquiring a new NH and an NCC, and generating a new AS key according to the NH; and transmitting the new AS key, the NCC and an E-RAB ID to the small cell base station.

The acquiring the new NH and the NCC specifically includes: receiving the NH and the NCC transmitted by the target base station; or, initiatively acquiring the NH and the NCC from the target base station; where, the NH and the NCC are acquired by the target base station from an MME during a path selection.

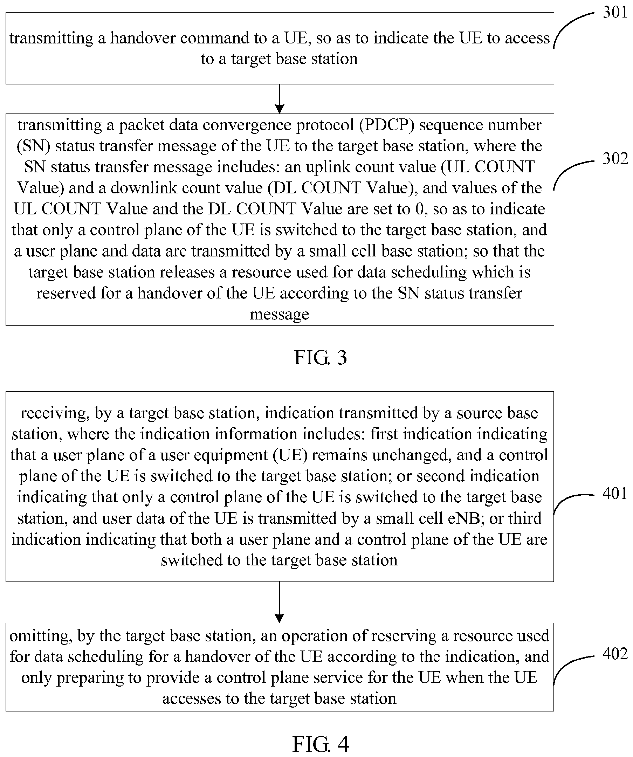

Reference may also be made to FIG. 3 which is a third flow chart of a handover control method according to an embodiment of the present invention, the method includes:
Step 301, transmitting a handover command to a UE, so as to indicate the UE to access to a target base station; and
Step 302, transmitting a packet data convergence protocol (PDCP) sequence number (SN) status transfer message of the UE to the target base station, where the SN status transfer message includes: an uplink count value (UL COUNT Value) and a downlink count value (DL COUNT Value), and values of the UL COUNT Value and the DL COUNT Value are set to 0, so as to indicate that only a control plane of the UE is switched to the target base station, and a user plane and data are transmitted by a small cell base station; so that the target base station releases a resource used for data scheduling which is reserved for a handover of the UE according to the SN status transfer message.

Alternatively, before step 301, the method may also include: receiving a measurement report transmitted by a user equipment (UE); selecting a target base station for the UE according to the measurement report; transmitting a handover request to the target base station; acquiring configuration information of the target base station from the target base station.

Alternatively, the handover request message may include: an identity of a small cell base station or a cell identity of a small cell base station, but is not limited thereto.

Alternatively, when or after receiving the handover confirmation message transmitted by the target base station, the method may also include: transmitting, by the source base station, information to the small cell base station for stopping transmitting data to the UE;
Alternatively, the method may also include: after the UE accesses to the target base station, transmitting, by the source base station or the target base station, information to the small cell base station for continuing transmitting data to the UE.

Alternatively, after the UE accesses to the target base station and before the source base station or the target base station transmits the information to the small cell base station for continuing transmitting data to the UE, the method may also include: acquiring a new NH and an NCC, and generating a new AS key according to the NH; and transmitting the new AS key, the NCC and an E-RAB ID to the small cell base station. The acquiring the new NH and the NCC specifically includes:
Receiving, by the source base station, the NH and the NCC transmitted by the target base station; or, acquiring, by the source base station, the NH and the NCC from the target base station initiatively; where, the NH and the NCC are acquired by the target base station from an MME during a path selection.

Reference may also be made to FIG. 4 which is a first flow chart of a resource control method according to an embodiment of the present invention, the method includes:
Step 401, receiving, by a target base station, indication transmitted by a source base station, where the indication includes: first indication indicating that a user plane of a user equipment (UE) remains unchanged, and a control plane of the UE is switched to the target base station; or second indication indicating that only a control plane of the UE is switched to the target base station, and user data of the UE is transmitted by a small cell base station; or third indication indicating that both a user plane and a control plane of the UE are switched to the target base station; and
Step 402, omitting, by the target base station, an operation of reserving a resource used for data scheduling for a handover of the UE according to the indication, and only preparing to provide a control plane service for the UE when the UE accesses to the target base station.

In embodiments of the present invention, the target base station, after receiving the indication transmitted by the source base station, will not reserve resources used for data scheduling for a handover of the UE, thereby ensuring a normal communication for the UE during its handover procedure.

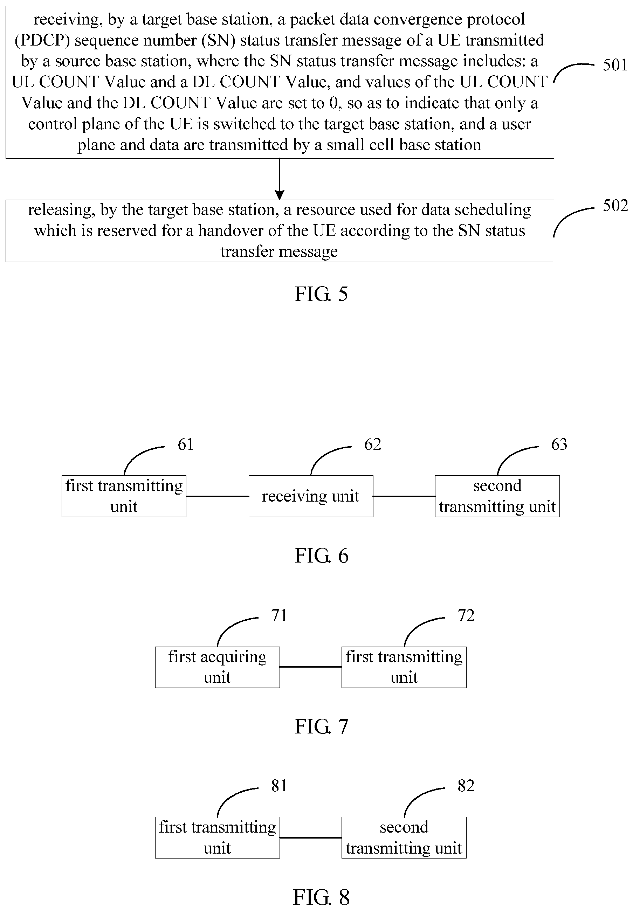

Reference may also be made to FIG. 5 which is a second flow chart of a resource control method according to an embodiment of the present invention, the method includes:
Step 501, receiving, by a target base station, a packet data convergence protocol (PDCP) sequence number (SN) status transfer message of a UE transmitted by a source base station, where the SN status transfer message includes: a UL COUNT Value and a DL COUNT Value, and values of the UL COUNT Value and the DL COUNT Value are set to 0, so as to indicate that only a control plane of the UE is switched to the target base station, and a user plane and data are transmitted by a small cell base station; and
Step 502, releasing, by the target base station, a resource used for data scheduling which is reserved for a handover of the UE according to the SN status transfer message.

In embodiments of the present invention, the target base station, after receiving the SN status transfer message carrying the indication, will release the resources used for data scheduling which are reserved for a handover of the UE, thereby ensuring that in a case where the user plane remains unchanged and the control plane is switched, a normal communication is ensured for the UE during its handover procedure.

Based on implementation procedures of the methods above, embodiments of the present invention also provide a handover control apparatus, and its first schematic structural diagram is as shown in FIG. 6, the apparatus includes: a first transmitting unit 61, a receiving unit 62 and a second transmitting unit 63. The first transmitting unit 61 is configured to transmit indication to a target base station, where the indication includes: first indication indicating that a user plane of a user equipment (UE) remains unchanged, and a control plane of the UE is switched to the target base station; or second indication indicating that only a control plane of the UE is switched to the target base station, and user data of the UE is transmitted by a small cell base station; or third indication indicating that both a user plane and a control plane of the UE are switched to the target base station; the receiving unit 62 is configured to receive a handover confirmation message that is transmitted by the target base station in response to the indication; and the second transmitting unit 63 is configured to transmit a handover command to the UE, so as to indicate the UE to access to the target base station.

The apparatus may be a processor, where each internal unit may be implemented by a logic integrated circuit, and the processor is integrated in an eNodeB.

The first transmitting unit includes: a first indication transmitting unit and/or a second indication transmitting unit, where the first indication transmitting unit is configured to transmit the indication to the target base station via a handover request message; or, the second indication transmitting unit is configured to acquire the indication by negotiating with the target base station before transmitting the indication to the target base station.

Alternatively, the apparatus may also include: a third transmitting unit and a fourth transmitting unit, where the third transmitting unit is configured to transmit information to the small cell base station for stopping transmitting data to the UE when or after the receiving unit receives the handover confirmation message transmitted by the target base station; and the fourth transmitting unit is configured to transmit information to the small cell base station for continuing transmitting data to the UE after the third transmitting unit transmits the information for stopping transmitting data to the UE and after the UE accesses to the target base station.

Alternatively, the apparatus may also include: an acquiring unit, a generating unit and a key transmitting unit, where the acquiring unit is configured to acquire a new NH and an NCC after the UE accesses to the target base station and before the fourth transmitting unit transmits the information for continuing transmitting data to the UE; the generating unit is configured to generate a new AS key according to the NH; and the key transmitting unit is configured to transmit the new AS key, the NCC and an E-RAB ID to the small cell base station.

Alternatively, the apparatus may be integrated in a base station, and may also be deployed in a network independently. Embodiments of the present invention will not make a limitation.

Reference may be made to corresponding implementation procedures in the methods described above for implementation procedures of functions and roles of all units in the apparatus, which will not be repeated herein.

Reference may also be made to FIG. 7 which is a second schematic structural diagram of a handover control apparatus according to an embodiment of the present invention, the apparatus includes: a first acquiring unit 71 and a first transmitting unit 72, the first acquiring unit 71 is configured to acquire indication transmitted by a target base station, where the indication includes: first indication indicating that a user plane of a user equipment (UE) remains unchanged, and a control plane of the UE is switched to the target base station; or second indication indicating that only a control plane of the UE is switched to the target base station, and user data of the UE is transmitted by a small cell base station; or third indication indicating that both a user plane and a control plane of the UE are switched to the target base station; and the first transmitting unit 72 is configured to transmit a handover command to the UE, so as to indicate the UE to access to the target base station.

The apparatus may be a processor, where each internal units may be implemented by a logic integrated circuit, and the processor is integrated in an eNodeB.

The first acquiring unit includes: a receiving unit and/or an initiative acquiring unit, the receiving unit is configured to receive a handover confirmation message transmitted by the target base station in response to the handover request message of the source base station, where the handover confirmation message includes the indication; the initiative acquiring unit is configured to initiatively acquire the indication from the target base station.

Alternatively, the apparatus may also include: a second transmitting unit and a third transmitting unit, the second transmitting unit is configured to transmit information to the small cell base station for stopping transmitting data to the UE before the first transmitting unit transmits the handover command to the UE; and the third transmitting unit is configured to transmit information to the small cell base station for continuing transmitting data to the UE after the second transmitting unit transmits the information for stopping transmitting data to the UE and after the UE accesses to the target base station.

Alternatively, the apparatus may also include: a second acquiring unit, a generating unit and a key transmitting unit, the second acquiring unit is configured to acquire a new NH and an NCC after the UE accesses to the target base station and before the third transmitting unit transmits the information for continuing transmitting data to the UE; the generating unit is configured to generate a new AS key according to the NH; and the key transmitting unit is configured to transmit the new AS key, the NCC and an E-RAB ID to the small cell base station.

Alternatively, the apparatus may be integrated in a base station, and may also be deployed in a network independently. Embodiments of the present invention will not make a limitation.

The apparatus may be a processor, where each internal unit may be implemented by a logic integrated circuit, and the processor is integrated in an eNodeB.

Reference may be made to corresponding implementation procedures in the methods described above for implementation procedures of functions and roles of all units in the apparatus, which will not be repeated herein.

Reference may also be made to FIG. 8 which is a third schematic structural diagram of a handover control apparatus according to an embodiment of the present invention, the apparatus includes: a first transmitting unit 81 and a second transmitting unit 82, the first transmitting unit 81 is configured to transmit a handover command to a UE, so as to indicate the UE to access to a target base station; and the second transmitting unit 82 is configured to transmit a packet data convergence protocol (PDCP) sequence number (SN) status transfer message of the UE to the target base station, where the SN status transfer message includes: a UL COUNT Value and a DL COUNT Value, and values of the UL COUNT Value and the DL COUNT Value are set to 0, so as to indicate that only a control plane of the UE is switched to the target base station, and a user plane and data are transmitted by a small cell base station, so that the target base station releases a resource used for data scheduling which is reserved for a handover of the UE according to the SN status transfer message.

The apparatus may be a processor, where each internal unit may be implemented by a logic integrated circuit, and the processor is integrated in an eNodeB.

Alternatively, the apparatus may also include: a third transmitting unit and a fourth transmitting unit, the third transmitting unit is configured to transmit information to the small cell base station for stopping transmitting data to the UE before the first transmitting unit transmits the handover command to the UE; and the fourth transmitting unit is configured to transmit information to the small cell base station for continuing transmitting data to the UE after the third transmitting unit transmits the information for stopping transmitting data to the UE and after the UE accesses to the target base station.

Alternatively, the apparatus may also include: an acquiring unit, a generating unit and a key transmitting unit, the acquiring unit is configured to acquire a new NH and an NCC after the UE accesses the target base station and before the fourth transmitting unit transmits the information for continuing transmitting data to the UE; the generating unit is configured to generate a new AS key according to the NH; and the key transmitting unit is configured to transmit the new AS key, the NCC and an E-RAB ID to the small cell base station.

Alternatively, the apparatus may be integrated in a base station, and may also be deployed in a network independently. Embodiments of the present invention will not make a limitation.

Reference may be made to corresponding implementation procedures in the methods described above for implementation procedures of functions and roles of all units in the apparatus, which will not be repeated herein.

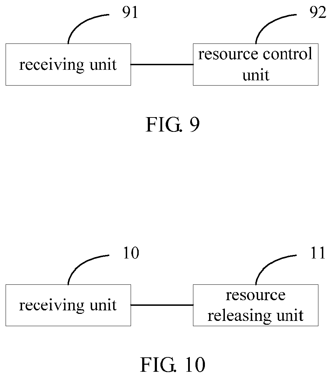

Reference may also be made to FIG. 9 which is a first schematic structural diagram of a resource control apparatus according to an embodiment of the present invention, the apparatus includes: a receiving unit 91 and a resource control unit 92, the receiving unit 91 is configured to receive indication transmitted by a source base station, where the indication includes: first indication indicating that a user plane of a user equipment (UE) remains unchanged, and a control plane of the UE is switched to the target base station; or second indication indicating that only a control plane of the UE is switched to the target base station, and user data of the UE is transmitted by a small cell base station; or third indication indicating that both a user plane and a control plane of the UE are switched to the target base station; and the resource control unit 92 is configured to omit an operation of reserving a resource used for data scheduling for a handover of the UE according to the indication, and only prepare to provide a control plane service for the UE when the UE accesses to the target base station;

The apparatus may be a processor, where each internal unit may be implemented by a logic integrated circuit, and the processor is integrated in an eNodeB.

Alternatively, the apparatus may be integrated in a base station, and may also be deployed in a network independently. Embodiments of the present invention will not make a limitation.

Reference may be made to corresponding implementation procedures in the methods described above for implementation procedures of functions and roles of all units in the apparatus, which will not be repeated herein.

Reference may also be made to FIG. 10 which is a second schematic structural diagram of a resource control apparatus according to an embodiment of the present invention, the apparatus includes: a receiving unit 10 and a resource releasing unit 11, the receiving unit 10 is configured to receive a packet data convergence protocol (PDCP) sequence number (SN) status transfer message of a UE transmitted by a source base station, where the SN status transfer message includes: a UL COUNT Value and a DL COUNT Value, and values of the UL COUNT Value and the DL COUNT Value are set to 0, so as to indicate that only a control plane of the UE is switched to the target base station, and a user plane and data are transmitted by a small cell base station; and the resource releasing unit 11 is configured to release a resource used for data scheduling which is reserved for a handover of the UE according to the SN status transfer message, and only prepare to provide a control plane service for the UE when the UE accesses to the target base station. The apparatus may be a processor, where each internal unit may be implemented by a logic integrated circuit, and the processor is integrated in an eNodeB.

Alternatively, the apparatus may be integrated in a base station, and may also be deployed in a network independently. Embodiments of the present invention will not make a limitation.

Reference may be made to corresponding implementation procedures in the methods described above for implementation procedures of functions and roles of all units in the apparatus, which will not be repeated herein.

In order to facilitate persons skilled in the art to understood, specific application examples are described hereunder.

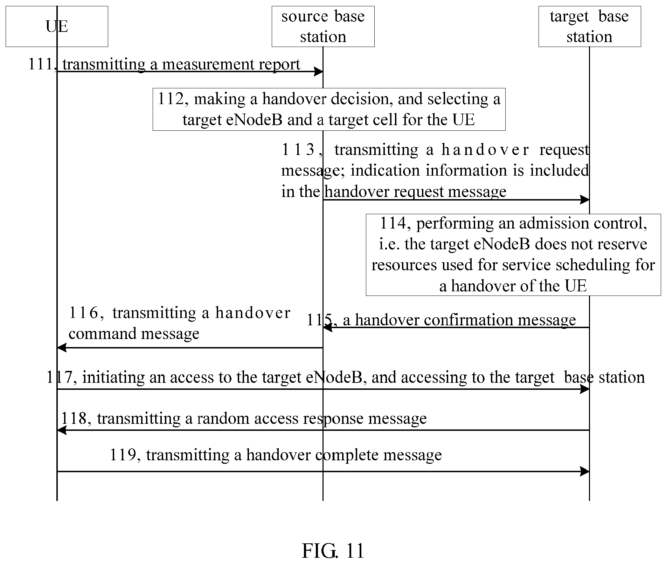

Reference may be made to FIG. 11 which is a flowchart of a first application example of a handover control method according to the present invention; in this embodiment, an example is taken where indication is carried in a request message, but is not limited thereto, the method specifically includes:
Step 111, transmitting, by a UE, a measurement report to a source eNodeB; where the measurement report may include a measurement result of a cell covered by a small cell base station and/or a measurement result of a cell covered by a candidate for target base station of handover, and so on. Specifically, the measurement result include {a cell identity of a small cell base station, a measurement result} and/or {a cell identity under a base station, a measurement result} respectively;
Step 112, making, by the source eNodeB, a handover decision based on the measurement report and other related information, and selecting a target cell for the UE; that is to say, the source base station makes the handover decision for the UE, and selects the target cell of a handover of the UE.
Step 113, transmitting, by the source eNodeB, a handover request message to a site (i.e. a target eNB) corresponding to the target cell; indication is included in the handover request message; where, the indication includes: first indication indicating that a user plane of a user equipment (UE) remains unchanged, and a control plane of the UE is switched to the target eNB; or second indication indicating that only a control plane of the UE is switched to the target eNB, and user data of the UE is transmitted by a small cell base station; or third indication indicating that both a user plane and a control plane of the UE are switched to the target eNB;

That is to say, the indication is added in the handover request message, to indicate that the UP remains unchanged and the CP is switched.

Alternatively, it can be indicateed by adding 1-bit indication in the handover request message, certainly, a value of the indication may also be set to 1 or 0 to represent the indication indicating that the UP remains unchanged and only the CP is switched, or that only the CP is switched and all user data of the UE is transmitted by the small cell base station; or represent the third indication indicating that both the user plane and the control plane are switched. Certainly, a value of the indication may also be set to other values, the values can be set arbitrarily according to needs, for example, 11 or 00, etc., and this embodiment will not make a limitation.

Alternatively, the handover request message may also include: an identity of a small cell base station (Pico), and/or a cell identity (Cell ID) of a Pico, and/or include indication indicating that the control plane of the UE is separated from the user plane.

Step 114, performing, by the target eNodeB, an admission control after receiving the handover request message transmitted by the source base station; i.e. the target eNodeB does not reserve a resource used for service scheduling for a handover of the UE.

Step 115, transmitting, by the target eNodeB, a handover confirmation message to the source eNodeB;
Alternatively, when or after receiving the handover confirmation message transmitted by the target base station, the source base station or the target base station may transmit a message to the Pico, where the message includes information for stopping transmitting data to the UE; specifically, the information may include an identity of the UE to represent stopping all data transfer related to the UE, or may include information about a data radio bearer (data radio bearer, DRB) of the UE transmitted by the Pico. The data radio bearer (data radio bearer, DRB) specifically includes one or more of the following, but is not just limited to: an E-RAB ID (E-UTRAN Radio Access Bearer ID, an E-UTRAN Radio Access Bearer ID), a Transport Layer Address (Transport Layer Address), a GTP-TEID (GTP Tunneling Protocol -Tunnel Endpoint Identifier, GTP Protocol-Tunnel UE Identifier).

Step 116, transmitting, by the source eNodeB, a handover command message to the UE so as to indicate the UE to initiate a random access to the target base station;
After step 116, the prior art also requires to perform step A: transmitting, by the source eNodeB, an SN status transfer message to the target base station to inform the target base station of uplink PDCPSN reception status (uplink PDCP SN receiver status) and downlink PDCPSN (the downlink PDCP SN transmitter status) of the UE, so that the target base station knows data transfer status of the current UE.

While in this embodiment, after step 116, there is no need to perform step A, this is because, in step 113, the source base station has informed the target base station of the indication via the handover request message, there is no need to switch the UP, the target base station, after receiving the indication, agrees this type of handover and switch the UE to the target cell. Thus, in embodiments of the present invention, the target base station does not need to know data reception situation of the UE, and will be clear about start number of forwarded data.

Step 117, initiating, by the UE, an access to the target eNodeB after receiving the handover command message, and accessing to the target base station;
Where, a procedure for the UE to access to the target eNodeB is: transmitting, by the UE, a random access preamble to the target eNodeB. The specific access procedure is well-known techniques for persons skilled in the art, and will not be repeated herein.

Step 118, transmitting, by the target eNodeB, a random access response message to the UE;
Step 119, transmitting, by the UE, a handover complete message to the target eNB.

Alternatively, if an optional step after step 115 is performed, then after step 119, i.e. after the UE completes the handover, the source/target base station transmits information to the small cell base station (Pico) for continuing transmitting data to the UE; specifically, the information includes: an identifier of the UE which is provided to indicate the service belongs to which terminal, or provided information about a data radio bearer (data radio bearer, DRB) of the UE. The data radio bearer (data radio bearer, DRB) specifically includes one or more of the following, but is not just limited to: an E-RAB ID (E-UTRAN Radio Access Bearer ID, an E-UTRAN Radio Access Bearer ID), a Transport Layer Address (Transport Layer Address), a GTP-TEID (GTP Tunneling Protocol -Tunnel Endpoint Identifier, GTP Protocol-Tunnel UE Identifier).

Certainly, the transmitting the information to the Pico for continuing transmitting data to the UE is not limited to be performed after this step, and may be performed after any one of steps after this step, for example, after step 119 and before the step of requesting a path selection, certainly, the transmitting the information to the Pico for continuing transmitting data to the UE may also be performed after the NCC and the new NH are acquired, this embodiment will not make a limitation.

Alternatively, after the UE accesses to the target base station, and before the information for continuing transmitting data to the UE is transmitted to the small cell base station, the embodiments may include: acquiring, by the target base station, a new NH and an NCC from an MME side, and generating a new AS key according to the NH; and transmitting the new AS key, the NCC and an E-RAB ID to the small cell base station.

That is to say, in a path switch process (path switch process) of the UE, since the UP of the UE remains unchanged at this time, it does not need to notify a gateway to change a data transfer target. However, since this process also includes acquiring a new NH and an NCC at the MME side by the target base station, the target eNB can initiate an intra-cell handover procedure immediately after a handover is completed, and uses the new NH to generate the new AS key. Thus, the small cell base station (Pico) needs to acquire a new NH and an NCC to perform data transfer, which specifically includes:
1) transmitting, by the target base station, a path selection request (Path switch request) message to an mobility management entity (MME, Mobility Management Entity);
   In this step, since the UP plane remains unchanged, a parameter in the request message is: a downlink transport point address (Transport layer address), which is still a transport point address of a Pico providing data transfer for the UE, rather than an address of the target base station;
2) transmitting, by the MME, a modify bearer request message (modify bearer request message) to a serving gateway after receiving the path selection request. This step is an optional step.
3) transmitting, by the serving gateway, a modify bearer response message (modify bearer Response message) to the MME, and confirming a user plane update request. This step is an optional step.
4) transmitting, by the MME, a path selection confirmation message (path switch request ACK) to the target base station after receiving the modify bearer response message.
   Although downlink transport point address (Transport layer address) is still the transport point address of the Pico providing data transfer for the UE, the MME also provides a new NCC and a new NH for the target base station.
5) transmitting, by the target base station, a "terminal resource information release" message (i.e. context release message) to the source base station, and notifying the source base station that the handover has been completed.
6) transmitting, by the source base station, a message to the Pico, so as to provide a new NCC and a new NH. Further, in order to identify that the service belongs to which UE, an identifier of the UE also needs to be provided particularly to indicate the service belongs to which terminal, or information about a data radio bearer (data radio bearer, DRB) of the terminal needs to be provided. The data radio bearer (data radio bearer, DRB) specifically includes one or more of the following, but is not just limited to: an E-RAB ID (E-UTRAN Radio Access Bearer ID, an E-UTRAN Radio Access Bearer ID), a Transport Layer Address (Transport Layer Address), a GTP-TEID (GTP Tunneling Protocol -Tunnel Endpoint Identifier, GTP Protocol-Tunnel UE Identifier).

Alternatively, parallel to 5), or after 5), the method may also include: transmitting, by the target eNodeB, a message to the Pico to provide a new NCC and a new NH; furthermore, in order to identify that the service belongs to which UE, an E-RAB ID also needs to be provided particularly.

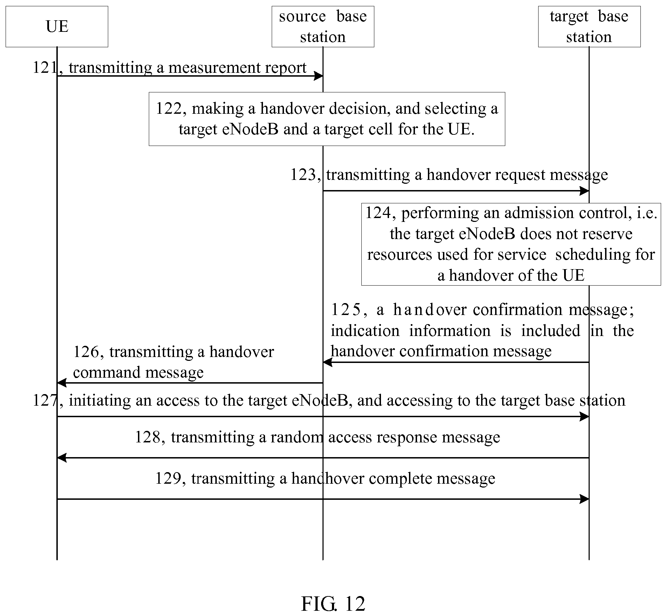

Reference may also be made to FIG. 12 which is a flowchart of a second application example of a handover control method according to the present invention; in this embodiment, an example is taken where indication indicating that a UE remains unchanged and a CP is switched is carried in a handover confirmation message transmitted by a target base station to a source base station, but is not limited thereto, the method specifically includes:
Step 121, transmitting, by a UE, a measurement report to a source eNodeB; where, reference may be made to the embodiments described above for contents of the measurement report, which will not be repeated herein;
Step 122, making, by the source eNodeB, a handover decision based on the measurement report and other related information, and selecting a target cell for the UE.
Step 123, transmitting, by the source eNodeB, a handover request message to a site (i.e. a target eNB) corresponding to the target cell;
   Alternatively, the handover request message may also include: an identity of a small cell base station (Pico), or a cell identity (Cell ID) of the Pico, or also include one or more of indication indicating that the control plane of the UE is separated from the user plane.
Step 124, performing, by the target eNodeB, an admission control after receiving the handover request message transmitted by the source base station;
Step 125, transmitting, by the target eNodeB, a handover confirmation message to the source eNodeB; where the handover confirmation message includes indication, where, the indication includes: first indication indicating that a user plane of a user equipment (UE) remains unchanged, and a control plane of the UE is switched to the target base station; or second indication indicating that only a control plane of the UE is switched to the target base station, and user data of the UE is transmitted by a small cell base station; or third indication indicating that both a user plane and a control plane of the UE are switched to the target base station.

That is to say, the indication is added in the handover request message to indicate that the UP remains unchanged and the CP is switched.

Alternatively, it can be indicated by adding 1-bit indication in the handover confirmation message, certainly, a value of the indication may also be set to 1 or 0 to represent the first indication indicating that the UP remains unchanged and only the CP is switched, or represent the second indication indicating that only the CP is switched and all user data of the UE is transmitted by the small cell base station; or represent the third indication indicating that both the user plane and the control plane are switched. Certainly, a value of the indication may also be set to other values, the values can be set arbitrarily according to needs, for example, 100 or 111, etc., and this embodiment will not make a limitation, as long as values of the three types of indication are set different from each other, it will be fine.

Alternatively, when or after receiving the handover confirmation message transmitted by the target base station, the source base station or the target base station may transmit a message to the Pico, where the message includes information for stopping transmitting data to the UE; specifically, the information may include an identity of the UE to represent stopping all data transfer related to the UE, or may include information about a data radio bearer (data radio bearer, DRB) of the UE transmitted by the Pico. The data radio bearer (data radio bearer, DRB) specifically includes one or more of the following, but is not just limited to: an E-RAB ID (E-UTRAN Radio Access Bearer ID, an E-UTRAN Radio Access Bearer ID), a Transport Layer Address (Transport Layer Address), a GTP-TEID (GTP Tunneling Protocol -Tunnel Endpoint Identifier, GTP Protocol-Tunnel UE Identifier).
Step 126, transmitting, by the source eNodeB, a handover command message to the UE to indicate the UE to initiate a random access to the target base station;
Step 127, initiating, by the UE, an access to the target eNodeB after receiving the handover command message, and accessing to the target base station;

Reference may be made to the embodiments described above for the access procedure, which will not be repeated herein.
Step 128, transmitting, by the target eNodeB, a random access response message to the UE;
Step 129, transmitting, by the UE, a handover complete message to the target eNB.

Alternatively, if an optional step after step 125 is performed, then after step 139, i.e. after the UE completes the handover, the source/target base station transmits information to the small cell base station (Pico) for continuing transmitting data to the UE; specifically, the information includes: an identifier of the UE which is provided to indicate the service belongs to which terminal, or provided information about a data radio bearer (data radio bearer, DRB) of the UE. The data radio bearer (data radio bearer, DRB) specifically includes one or more of the following, but is not just limited to: an E-RAB ID (E-UTRAN Radio Access Bearer ID, an E-UTRAN Radio Access Bearer ID), a Transport Layer Address (Transport Layer Address), a GTP-TEID (GTP Tunneling Protocol -Tunnel Endpoint Identifier, GTP Protocol-Tunnel UE Identifier).

Certainly, the transmitting the information for continuing transmitting data to the UE is not limited to be performed after this step, and may be performed after any one of steps after this step, for example, after step 129 and before the step of requesting a path selection, certainly, the transmitting the information to the Pico for continuing transmitting data to the UE may also be performed after the NCC and the new NH are acquired, this embodiment will not make a limitation.

Reference may be made to the procedures as described in FIG. 11 for subsequent procedures of this embodiment, which will not be repeated herein.

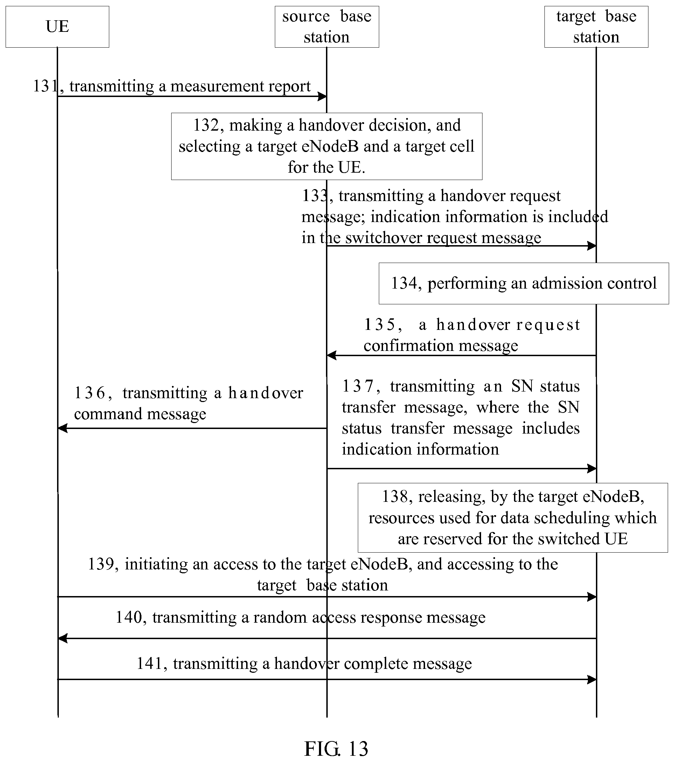

Reference may also be made to FIG. 13 which is a flowchart of a third application example of a handover control method according to the present invention; in this embodiment, an example is taken where indication indicating that a UE remains unchanged and a CP is switched is carried in a packet data convergence protocol (PDCP) sequence number (SN) status transfer message of the UE transmitted by a source eNodeB to a target eNodeB, but is not limited thereto, the method specifically includes:
Step 131, transmitting, by a UE, a measurement report to a source eNodeB; where, reference may be made to the descriptions above for contents of the measurement report, which will not be repeated herein;
Step 132, making, by the source eNodeB, a handover decision based on the measurement report and other related information, and selecting a target cell for the UE.
Step 133, transmitting, by the source eNodeB, a handover request message to a site (i.e. a target eNB) corresponding to the target cell;
   Alternatively, the handover request message may also include: an identity of a small cell base station (Pico) and a cell identity (Cell ID) of the Pico, or a cell identity (Cell ID) of Pico, or also include one or more of indication indicating that the control plane of the UE is separated from the user plane.
Step 134, performing, by the target eNodeB, an admission control after receiving the handover request message transmitted by the source base station;
Step 135, transmitting, by the target eNodeB, a handover confirmation message to the source eNodeB;

Alternatively, when or after receiving the handover confirmation message transmitted by the target base station, the source base station or the target base station may transmit a message to the Pico, where the message includes information for stopping transmitting data to the UE; specifically, the information may include an identity of the UE to represent stopping all data transfer related to the UE, or may include information about a data radio bearer (data radio bearer, DRB) of the UE transmitted by the Pico. The data radio bearer (data radio bearer, DRB) specifically includes one or more of the following, but is not just limited to: an E-RAB ID (E-UTRAN Radio Access Bearer ID, an E-UTRAN Radio Access Bearer ID), a Transport Layer Address (Transport Layer Address), a GTP-TEID (GTP Tunneling Protocol -Tunnel Endpoint Identifier, GTP Protocol-Tunnel UE Identifier).
Step 136, transmitting, by the source eNodeB, a handover command message to the UE to indicate the UE to initiate a random access to the target base station;
Step 137, transmitting, by the source eNodeB, a packet data convergence protocol (PDCP) sequence number (SN) status transfer (SN status transfer) message of the UE to the target base station, where the SN status transfer message includes indication, where the indication includes an UL COUNT Value and a DL COUNT Value, and values of the UL COUNT Value and the DL COUNT Value are set to 0, so as to indicate that only a control plane of the UE is switched to the target eNodeB, and a user plane and data are transmitted by a small cell base station. Certainly, in this embodiment, values of the UL COUNT Value and the DL COUNT Value may also be set to other values, this embodiment will not make a limitation.

A COUNT Value is:
This information element indicates the 12 bit PDCP sequence number and the corresponding 20 bit Hyper frame number.

| IE/Group Name | Presence | Range | IE type and reference | Semantics description | Criticality | Assigned Criticality |
|---|---|---|---|---|---|---|
| PDCP-SN | M | | INTEGER (0..4095) | | - | - |
| HFN | M | | INTEGER (0..1048575) | | - | - |

Step 138, receiving, by the target base station, the SN status transfer message of the source base station, since indication is carried in the message, then, releasing, by the target base station, a resource used for data scheduling which is reserved for the switched UE.

Step 139, after step 136, i.e. after receiving the handover command message, initiating, by the UE, an access to the target eNodeB, and accessing to the target base station.

Reference may be made to the embodiments described above for the access procedure, which will not be repeated herein.
Step 140, transmitting, by the target eNodeB, a random access response message to the UE;
Step 141, transmitting, by the UE, a handover complete message to the target eNB.

Alternatively, if an optional step after step 135 is performed, then after step 141, i.e. after the UE completes the handover, the source/target base station transmits information to the small cell base station (Pico) for continuing transmitting data to the UE; specifically, the information includes: an identifier of the UE which is provided to indicate the service belongs to which terminal, or provided information about a data radio bearer (data radio bearer, DRB) of the UE. The data radio bearer (data radio bearer, DRB) specifically includes one or more of the following, but is not just limited to: an E-RAB ID (E-UTRAN Radio Access Bearer ID, an E-UTRAN Radio Access Bearer ID), a Transport Layer Address (Transport Layer Address), a GTP-TEID (GTP Tunneling Protocol -Tunnel Endpoint Identifier, GTP Protocol-Tunnel UE Identifier).

Certainly, the transmitting the information for continuing transmitting data to the UE is not limited to be performed after this step, and may be performed after any one of steps after this step, for example, after step 141 and before the step of requesting a path selection, certainly, the transmitting the information to the Pico for continuing transmitting data to the UE may also be performed after the NCC and the new NH are acquired, this embodiment will not make a limitation.

In embodiments of the present invention, a source base station transmits indication to a target base station, so that the target base station, after acquiring the indication, does not reserve resources used for data scheduling for a handover of the UE, or release resources used for data scheduling which are reserved for a handover of the UE. Therefore, in a case where a user plane remains unchanged and a control plane is switched, a normal communication is ensured for the UE during its handover.

In embodiments of the present invention, a UE may be any one of the following, it may be stationary, and may also be mobile, a stationary UE may specifically include: a terminal (terminal), a mobile station (mobile station), a subscriber unit (subscriber unit), a station (station), or the like; a mobile UE may specifically include: a cellular phone (cellular phone), a personal digital assistant (PDA, personal digital assistant), a wireless modem (modem), a wireless communication device, a handheld (handheld) device, a laptop computer (laptop computer), a cordless phone (cordless phone), a wireless local loop (WLL, wireless local loop) station, or the like, the UEs described above may be distributed through the overall wireless network.

In order to facilitate the understanding of persons skilled in the art, specific application examples are described hereunder. It should be noted that, in this embodiment, a mobility management network element can be any one of an MME (Mobility Management Entity, mobility management entity) and an SGSN (Serving GPRS Support Node, serving GPRS support node). For convenience of descriptions, specific illustrations are made by taking the mobility management network element in the following application examples as the MME.

It should be noted that, in the description herein, the terms like "first" and "second" are only used to differentiate one entity or operation from another, but is not necessarily construed as any practical relationship or order between the entities or operations. Moreover, the terms "include", "comprise" and any variation thereof refer to "including but not limited to". Therefore, in the context of a process, method, object or device that includes a series of elements, the process, method, object or device not only includes such elements, but also includes other elements not specified explicitly, or may include inherent elements of the process, method, object or device. Unless otherwise specified, in the context of "include" or "comprise", the process, method, object or device that includes or comprises the specified elements may include other identical elements.

From the above description of the embodiments, it should be readily recognized by persons skilled in the art that: besides implementation of the present invention through software and necessary universal hardware platform, the present invention may also be implemented through hardware, however, in many cases, the former is a preferred embodiment; technical solutions of the present invention in substance or the part contributing to the prior art may be embodied in software products, the computer software products may be stored in a storage medium such as a read-only memory (Read-Only Memory, ROM)/a random access memory (Random Access Memory, RAM), a magnetic disk, or an optical disc, and includes several instructions for instructing a computer device (which may be a personal computer, a server, or a network device) to implement the methods described in all embodiments or some parts of the embodiments of the present invention.

The foregoing description only describes preferred embodiments of the present invention. It should be noted that any modification or improvement can be made by a person of ordinary skill in the art without departing from the principle of the present invention, which is defined by the appended claims.

## Claims

1. A handover control method, comprising:
acquiring (201), by a source base station, indication transmitted by a target base station, wherein the indication comprises: first indication indicating that a user plane of a user equipment, UE, remains unchanged, and a control plane of the UE is switched to the target base station; or second indication indicating that only a control plane of the UE is switched to the target base station, and user data of the UE is transmitted by a small cell base station; or third indication indicating that both a user plane and a control plane of the UE are switched to the target base station;
transmitting, by the source base station, information to the small cell base station for stopping transmitting data to the UE;
transmitting (202), by the source base station, a handover command to the UE, so as to indicate the UE to access to the target base station;
acquiring a new next hop key, NH, and a next hop chaining counter, NCC, and generating a new access stratus, AS, key according to the NH;
transmitting the new AS key, the NCC and an evolved universal terrestrial radio access network radio access bearer identity, E-RAB ID, to the small cell base station; and
transmitting information to the small cell base station for continuing transmitting data to the UE.

2. The method according to claim 1, wherein, before the acquiring the indication transmitted by the target base station, the method comprises: transmitting a handover request message to the target base station, wherein the handover request message comprises an identity of a small cell base station or a cell identity of a small cell base station.

3. The method according to claim 2, wherein, the acquiring the indication transmitted by the target base station comprises:
receiving a handover confirmation message transmitted by the target base station, wherein the handover confirmation message comprises the indication; or,
acquiring the indication from the target base station initiatively.

4. The method according to any one of claims 1 to 3, wherein, different values are set for the indication for distinguishing the first indication, the second indication and the third indication from each other.

5. A handover control apparatus, serving as a source base station, comprising:
a first acquiring unit (71), configured to acquire indication transmitted by a target base station, wherein the indication comprises: first indication indicating that a user plane of a user equipment, UE, remains unchanged, and a control plane of the UE is switched to the target base station; or second indication indicating that only a control plane of the UE is switched to the target base station, and user data of the UE is transmitted by a small cell base station; or third indication indicating that both a user plane and a control plane of the UE are switched to the target base station;
a first transmitting unit (72), configured to transmit a handover command to the UE, so as to indicate the UE to access to the target base station;
a second transmitting unit, configured to transmit information to the small cell base station for stopping transmitting data to the UE before the first transmitting unit (72) transmits the handover command to the UE;
a third transmitting unit, configured to transmit information to the small cell base station for continuing transmitting data to the UE after the second transmitting unit transmits the information for stopping transmitting data to the UE and after the UE accesses to the target base station;
a second acquiring unit, configured to acquire a new next hop key, NH, and a next hop chaining counter, NCC, after the UE accesses to the target base station and before the third transmitting unit transmits the information for continuing transmitting data to the UE;
a generating unit, configured to generate a new access stratus, AS, key according to the NH;
a key transmitting unit, configured to transmit the new AS key, the NCC and an E-RAB ID to the small cell base station.

6. The apparatus according to claim 5, wherein, the first acquiring unit comprises:
a receiving unit, configured to receive a handover confirmation message transmitted by the target base station, wherein the handover confirmation message comprises the indication; or,
an initiative acquiring unit, configured to acquire the indication from the target base station initiatively.

7. A computer readable storage medium for storing a computer program, wherein the computer program causes an handover control apparatus serving as a source base station to perform the handover control method according to any one of claims 1 to 4.

## Patentansprüche

1. Übergabesteuerungsverfahren, das Folgendes umfasst:
Erfassen (201), durch eine Quellbasisstation, einer durch eine Zielbasisstation übertragenen Angabe, wobei die Angabe Folgendes umfasst: eine erste Angabe, die angibt, dass eine Benutzerebene eines Benutzergeräts, UE, unverändert bleibt und eine Steuerungsebene des UE auf die Zielbasisstation umgeschaltet wird; oder einer zweiten Angabe, die angibt, dass nur eine Steuerungsebene des UE auf die Zielbasisstation umgeschaltet wird und Benutzerdaten des UE durch eine Kleinzellen-Basisstation übertragen werden; oder einer dritten Angabe, die angibt, dass sowohl eine Benutzerebene als auch eine Steuerungsebene des UE auf die Zielbasisstation umgeschaltet werden;
Übertragen, durch die Quellbasisstation, von Informationen an die Kleinzellen-Basisstation zum Stoppen der Datenübertragung an das UE;
Übertragen (202), durch die Quellbasisstation, eines Übergabebefehls an das UE, so dass dem UE angegeben wird, auf die Zielbasisstation zuzugreifen;
Erfassen eines neuen Nächst-Hop-Schlüssels, NH, und eines Nächst-Hop-Verkettungszählers, NCC, und Erzeugen eines neuen Zugriffsstratum-Schlüssels bzw. AS-Schlüssels gemäß dem NH;
Übertragen des neuen AS-Schlüssels, des NCC und einer neuen "Evolved Universal Terrestrial Radio Access Network"-Funkzugriff-"Bearer"-Identität bzw. E-RAB ID an die Kleinzellen-Basisstation; und
Übertragen von Informationen an die Kleinzellen-Basisstation zum Fortführen der Datenübertragung an das UE.

2. Verfahren nach Anspruch 1, wobei das Verfahren, vor dem Erfassen der durch die Zielbasisstation übertragenen Angabe, Folgendes umfasst: Übertragen einer Übergabeanforderungsnachricht, wobei die Übergabeanforderungsnachricht eine Identität einer Kleinzellen-Basisstation oder eine Zellenidentität einer Kleinzellen-Basisstation umfasst.

3. Verfahren nach Anspruch 2, wobei das Erfassen der durch die Zielbasisstation übertragenen Angabe Folgendes umfasst:
Empfangen einer durch die Zielbasisstation übertragenen Übergabebestätigungsnachricht, wobei die Übergabebestätigungsnachricht die Angabe umfasst; oder
Erfassen der Angabe von der Zielbasisstation aus Eigeninitiative.

4. Verfahren nach einem der Ansprüche 1 bis 3, wobei verschiedene Werte für die Angabe eingestellt werden, um die erste Angabe, die zweite Angabe und die dritte Angabe voneinander zu unterscheiden.

5. Übergabesteuerungseinrichtung, die als eine Quellbasisstation dient, und Folgendes umfasst:
eine erste Erfassungseinheit (71), ausgelegt zum Erfassen einer durch eine Zielbasisstation übertragenen Angabe, wobei die Angabe Folgendes umfasst: eine erste Angabe, die angibt, dass eine Benutzerebene eines Benutzergeräts, UE, unverändert bleibt und eine Steuerungsebene des UE auf die Zielbasisstation umgeschaltet wird; oder eine zweite Angabe, die angibt, dass nur eine Steuerungsebene des UE auf die Zielbasisstation umgeschaltet wird und Benutzerdaten des UE durch eine Kleinzellen-Basisstation übertragen werden; oder eine dritte Angabe, die angibt, dass sowohl eine Benutzerebene als auch eine Steuerungsebene des UE auf die Zielbasisstation umgeschaltet werden;
eine erste Übertragungseinheit (72), ausgelegt zum Übertragen eines Übergabebefehls an das UE, so dass dem UE angegeben wird, auf die Zielbasisstation zuzugreifen;
eine zweite Übertragungseinheit, ausgelegt zum Übertragen von Informationen an die Kleinzellen-Basisstation zum Stoppen der Datenübertragung an das UE, bevor die erste Übertragungseinheit (72) den Übergabebefehl an das UE überträgt;
eine dritte Übertragungseinheit, ausgelegt zum Übertragen von Informationen an die Kleinzellen-Basisstation zum Fortführen der Datenübertragung an das UE, nachdem die zweite Übertragungseinheit die Informationen zum Stoppen der Datenübertragung an das UE übertragen hat und nachdem das UE auf die Zielbasisstation zugegriffen hat;
eine zweite Erfassungseinheit, ausgelegt zum Erfassen eines neuen Nächst-Hop-Schlüssels, NH, und eines Nächst-Hop-Verkettungszählers, NCC, nachdem das UE auf die Zielbasisstation zugegriffen hat und bevor die dritte Übertragungseinheit die Informationen zum Fortführen der Datenübertragung an das UE sendet;
eine Erzeugungseinheit, ausgelegt zum Erzeugen eines neuen Zugriffsstratum-Schlüssels bzw. AS-Schlüssels gemäß dem NH;
eine Schlüsselübertragungseinheit, ausgelegt zum Übertragen des neuen AS-Schlüssels, des NCC und einer E-RAB ID an die Kleinzellen-Basisstation.

6. Einrichtung nach Anspruch 5, wobei die erste Erfassungseinheit Folgendes umfasst:
eine Empfangseinheit, ausgelegt zum Empfangen einer durch die Zielbasisstation übertragenen Übergabebestätigungsnachricht, wobei die Übergabebestätigungsnachricht die Angabe umfasst; oder
eine Eigeninititativ-Erfassungseinheit, ausgelegt zum Erfassen der Angabe von der Zielbasisstation aus Eigeninitiative.

7. Computerlesbares Speicherungsmedium zum Speichern eines Computerprogramms, wobei das Computerprogramm eine Übergabesteuerungseinrichtung, die als eine Quellbasisstation dient, zum Durchführen des Übergabesteuerungsverfahrens nach einem der Ansprüche 1 bis 4 veranlasst.

## Revendications

1. Procédé de commande de transfert, comprenant :
l'acquisition (201), par une station de base source, d'une indication transmise par une station de base cible, l'indication comprenant : une première indication indiquant qu'un plan d'utilisateur d'un équipement d'utilisateur, UE, reste inchangé, et qu'un plan de commande de l'UE est commuté vers la station de base cible ; ou une deuxième indication indiquant que seulement un plan de commande de l'UE est commuté vers la station de base cible, et que des données d'utilisateur de l'UE sont transmises par une station de base de petite cellule ; ou une troisième indication indiquant qu'à la fois un plan d'utilisateur et un plan de commande de l'UE sont commutés vers la station de base cible ;
la transmission, par la station de base source, d'informations à la station de base de petite cellule pour arrêter la transmission de données à l'UE ;
la transmission (202), par la station de base source, d'une commande de transfert à l'UE, de manière à indiquer à l'UE d'accéder à la station de base cible ;
l'acquisition d'une nouvelle clé de saut suivant, NH, et d'un compteur de chaînage de saut suivant, NCC, et la génération d'une nouvelle clé de strate d'accès, AS, en fonction du NH ;
la transmission de la nouvelle clé AS, du NCC, et d'une identité de porteuse d'accès radio de réseau d'accès radio terrestre universel évolué, E-RAB ID, à la station de base de petite cellule ; et
la transmission d'informations à la station de base de petite cellule pour continuer à transmettre des données à l'UE.

2. Procédé selon la revendication 1, avant l'acquisition de l'indication transmise par la station de base cible, le procédé comprenant : la transmission d'un message de demande de transfert à la station de base cible, le message de demande de transfert comprenant une identité d'une station de base de petite cellule ou une identité de cellule d'une station de base de petite cellule.

3. Procédé selon la revendication 2, l'acquisition de l'indication transmise par la station de base cible comprenant :
la réception d'un message de confirmation de transfert transmis par la station de base cible, le message de confirmation de transfert comprenant l'indication ; ou,
l'acquisition de l'indication provenant de la station de base cible de façon initiale.

4. Procédé selon l'une quelconque des revendications 1 à 3, différentes valeurs étant définies pour l'indication afin de distinguer la première indication, la deuxième indication et la troisième indication les unes des autres.

5. Appareil de commande de transfert, servant de station de base source, comprenant :
une première unité d'acquisition (71), configurée pour acquérir une indication transmise par une station de base cible, l'indication comprenant : une première indication indiquant qu'un plan d'utilisateur d'un équipement d'utilisateur, UE, reste inchangé, et qu'un plan de commande de l'UE est commuté vers la station de base cible ; ou une deuxième indication indiquant que seulement un plan de commande de l'UE est commuté vers la station de base cible, et que des données d'utilisateur de l'UE sont transmises par une station de base de petite cellule ; ou une troisième indication indiquant qu'à la fois un plan d'utilisateur et un plan de commande de l'UE sont commutés vers la station de base cible ;
une première unité de transmission (72), configurée pour transmettre une commande de transfert à l'UE, de manière à indiquer à l'UE d'accéder à la station de base cible ;
une deuxième unité de transmission, configurée pour transmettre des informations à la station de base de petite cellule afin d'arrêter la transmission de données à l'UE avant que la première unité de transmission (72) ne transmette la commande de transfert à l'UE;
une troisième unité de transmission, configurée pour transmettre des informations à la station de base de petite cellule pour continuer à transmettre des données à l'UE après que la deuxième unité de transmission a transmis les informations pour arrêter la transmission de données à l'UE et après que l'UE a accédé à la station de base cible ;
une deuxième unité d'acquisition, configurée pour acquérir une nouvelle clé de saut suivant, NH, et un compteur de chaînage de saut suivant, NCC, après que l'UE a accédé à la station de base cible et avant que la troisième unité de transmission ne transmette les informations pour continuer à transmettre des données à l'UE ;
une unité de génération, configurée pour générer une nouvelle clé de strate d'accès, AS, en fonction du NH ;
une unité de transmission de clé, configurée pour transmettre la nouvelle clé AS, le NCC et une E-RAB ID à la station de base de petite cellule.

6. Appareil selon la revendication 5, la première unité d'acquisition comprenant :
une unité de réception, configurée pour recevoir un message de confirmation de transfert transmis par la station de base cible, le message de confirmation de transfert comprenant l'indication ; ou,
une unité d'acquisition initiale, configurée pour acquérir l'indication en provenance de la station de base cible de façon initiale.

7. Support de stockage lisible par ordinateur pour stocker un programme informatique, le programme informatique amenant un appareil de commande de transfert servant de station de base source à réaliser le procédé de commande de transfert selon l'une quelconque des revendications 1 à 4.
